(19) Europäisches Patentamt
European Patent Office
Office européen des brevets

(11) EP 4 199 156 A1

(12) EUROPEAN PATENT APPLICATION
published in accordance with Art. 153(4) EPC

(43) Date of publication:
**21.06.2023 Bulletin 2023/25**

(21) Application number: **22816324.2**

(22) Date of filing: **06.05.2022**

(51) International Patent Classification (IPC):
***H01M 4/62*** *(2006.01)* ***H01M 4/1391*** *(2010.01)*
***H01M 4/525*** *(2010.01)* ***H01M 4/505*** *(2010.01)*
***H01M 4/131*** *(2010.01)* ***H01M 10/052*** *(2010.01)*
***H01M 4/02*** *(2006.01)*

(52) Cooperative Patent Classification (CPC):
**H01M 4/02; H01M 4/131; H01M 4/1391; H01M 4/505; H01M 4/525; H01M 4/62; H01M 10/052;** Y02E 60/10

(86) International application number:
**PCT/KR2022/006460**

(87) International publication number:
**WO 2022/255665 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2021 KR 20210069635**

(71) Applicant: **LG Energy Solution, Ltd.**
**Seoul 07335 (KR)**

(72) Inventors:
- **KIM, Ji Hye**
  **Daejeon 34122 (KR)**
- **OH, Sang Seung**
  **Daejeon 34122 (KR)**
- **KIM, Hye Hyeon**
  **Daejeon 34122 (KR)**
- **JO, Chi Ho**
  **Daejeon 34122 (KR)**
- **YOO, Tae Gu**
  **Daejeon 34122 (KR)**

(74) Representative: **Hoffmann Eitle**
**Patent- und Rechtsanwälte PartmbB**
**Arabellastraße 30**
**81925 München (DE)**

# (54) MASTER BATCH COMPRISING POSITIVE ELECTRODE ACTIVE MATERIAL AND IRREVERSIBLE ADDITIVE, AND POSITIVE ELECTRODE SLURRY, FOR LITHIUM SECONDARY BATTERY, CONTAINING SAME

(57) The present technology relates to a master batch for a positive electrode additive and a positive electrode slurry for a lithium secondary battery that contains the same, wherein the master batch contains a high content of irreversible additive together with a positive electrode active material so that a small amount of irreversible additive is dispersed in the positive electrode slurry with high dispersion without loss when a positive electrode is manufactured, and thus a positive electrode for a lithium secondary battery manufactured using the irreversible additive has high electrical properties and reliability, and a degree of freedom in design is improved when the positive electrode is manufactured.

EP 4 199 156 A1

## Description

[Technical Field]

The present disclosure relates to a master batch for a positive electrode additive that contains a positive electrode active material and a high content of irreversible additive, and a positive electrode slurry for a lithium secondary battery that contains the same.

This application claims the benefit of priority based on Korean Patent Application No. 10-2021-0069635, filed on May 31, 2021, and the entire contents of the Korean patent application are incorporated herein by reference.

[Background Art]

As development and demands for technology for mobile devices increase, the demand for secondary batteries serving as energy sources is rapidly increasing. Among these secondary batteries, lithium secondary batteries having a high energy density and operating potential, a long cycle life, and a low self-discharge rate have been commercialized and widely used.

Recently, as lithium secondary batteries are used as power sources for medium-large devices such as electric vehicles, the lithium secondary batteries are further required to have a high capacity, a high energy density, and a low cost, and irreversible additives used in electrodes are also required to have a higher irreversible capacity.

In response to the above demand, conventional irreversible additives such as $Li_6CoO_4$ and the like have been developed. However, the conventional irreversible additive is structurally unstable and can allow a large amount of oxygen ($O_2$) gas to be generated as follows when the secondary battery is charged, and thus the use of a high content of irreversible additive in a positive electrode has limitations in terms of charging and discharging efficiency and safety of the lithium secondary battery. Accordingly, efforts have been made to reduce the irreversibility of the lithium secondary battery by using a low content of irreversible additive:

$$Li_6CoO_4 \rightarrow Li_4CoO_4 \xrightarrow{O_2\,\text{Generation}} Li_1CoO_{2.5} \xrightarrow{O_2\,\text{Generation}} CoO_2$$

However, when the irreversible additive is used in a low content, particularly, in a small amount of less than 2 wt% with respect to a total weight of a positive electrode slurry, there are problems in that it is difficult to ensure dispersibility of the irreversible additive in a positive electrode slurry, and thus the reliability of the lithium secondary battery is lowered, and a loss amount of the irreversible additive is increased due to the scattering of the irreversible additive having a low particle size during a manufacturing process of a positive electrode, and thus a degree of freedom in process design is reduced.

Therefore, the development of technology is required in which, when a very small amount of irreversible additive is used, fairness and a degree of freedom in process design are improved by preventing a loss of the irreversible additive when a positive electrode is manufactured, and the reliability of a lithium secondary battery is ensured by ensuring the dispersibility of the irreversible additive in a positive electrode slurry.

[Disclosure]

[Technical Problem]

An object of the present technology is to provide a positive electrode slurry containing a significantly small amount of irreversible additive with high dispersibility without loss when a positive electrode is manufactured, and a positive electrode for a lithium secondary battery manufactured using the same.

[Technical Solution]

The present technology is directed to solving the above-described problem and providing a master batch for a positive electrode additive, which includes 0.5 to 50 parts by weight of a lithium cobalt oxide represented by Chemical Formula 1 below with respect to 100 parts by weight of a first positive electrode active material.

[Chemical Formula 1] $Li_pCo_{1-q}M^1_qO_2$

In Chemical Formula 1 above, $M^1$ denotes one or more elements selected from the group consisting of W, Cu,

Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.4$, respectively.

The master batch for a positive electrode additive may further include 1 to 10 parts by weight of a first binder with respect to 100 parts by weight of the first positive electrode active material.

An average particle size ($D_{50}$) of the master batch for a positive electrode additive may range from 0.05 mm to 10 mm, an average particle size ($D_{50}$) of the first positive electrode active material contained in the master batch may range from 0.5 to 100 $\mu$m, and an average particle size ($D_{50}$) of the lithium cobalt oxide may range from 1 to 200 $\mu$m, wherein the average particle size of the lithium cobalt oxide may be greater than the average particle size of the first positive electrode active material.

The present technology is also directed to providing a positive electrode slurry for a lithium secondary battery that includes the master batch for a positive electrode additive according to the present technology, which includes 0.5 to 50 parts by weight of a lithium cobalt oxide represented by Chemical Formula 1 below with respect to 100 parts by weight of a first positive electrode active material; a second positive electrode active material; a conductive material; and a second binder.

[Chemical Formula 1] $Li_pCo_{1-q}M^1_qO_2$

In Chemical Formula 1 above, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.4$, respectively.

The lithium cobalt oxide represented by Chemical Formula 1 contained in the master batch may be included in an amount of 0.05 to 2.0 parts by weight with respect to 100 parts by weight of the total amount of the positive electrode slurry.

The master batch for a positive electrode additive may be included in an amount of 1 to 150 parts by weight with respect to 100 parts by weight of the second positive electrode active material.

Each of the first positive electrode active material and the second positive electrode active material may include a lithium metal composite oxide represented by Chemical Formula 2 below.

[Chemical Formula 2] $Li_x[Ni_yCo_zMn_wM^2_v]O_u$

In Chemical Formula 2 above, $M^2$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0.1 \leq y < 1$, $0.01 < z \leq 0.6$, $0.01 < w \leq 0.6$, $0 \leq v \leq 0.2$, and $1.5 \leq u \leq 5$, respectively.

The conductive material may be included in an amount of 1 to 5 parts by weight with respect to 100 parts by weight of the total amount of the positive electrode slurry.

The content of the second binder may range from 1 to 5 parts by weight with respect to 100 parts by weight of the total amount of the positive electrode slurry.

The present technology is also directed to providing a positive electrode for a lithium secondary battery, which has a structure in which a positive electrode current collector, a first positive electrode mixture layer, and a second positive electrode mixture layer are sequentially laminated, wherein each of the first positive electrode mixture layer and the second positive electrode mixture layer is formed using the positive electrode slurry for a lithium secondary battery according to the present technology.

An amount of a lithium cobalt oxide represented by Chemical Formula 1 below contained in the first positive electrode mixture layer may range from 0.5 to 2.0 parts by weight with respect to 100 parts by weight of the first positive electrode mixture layer, and an amount of a lithium cobalt oxide represented by Chemical Formula 1 below contained in the second positive electrode mixture layer may range from 0.01 to 0.5 parts by weight with respect to 100 parts by weight of the second positive electrode mixture layer.

[Chemical Formula 1] $Li_pCo_{1-q}M^1_qO_2$

In Chemical Formula 1 above, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.4$, respectively.

A total amount of the lithium cobalt oxides contained in the first positive electrode mixture layer and the second positive electrode mixture layer may be less than or equal to 0.5 parts by weight with respect to 100 parts by weight of the total amount of the positive electrode active materials contained in the first positive electrode mixture layer and the second positive electrode mixture layer.

A ratio of an average thickness of the first positive electrode mixture layer to an average thickness of the second

positive electrode mixture layer may range from 0.1 to 0.9.

The present technology is also directed to providing a lithium secondary battery including the positive electrode according to the present technology, a negative electrode, and a separator interposed between the positive electrode and the negative electrode.

[Advantageous Effects]

According to a master batch for a positive electrode additive according to the present technology, a high content of irreversible additive can be contained together with a positive electrode active material so that a small amount of irreversible additive can be dispersed in a positive electrode slurry with high dispersion without loss when a positive electrode is manufactured, and thus a positive electrode for a lithium secondary battery manufactured using the irreversible additive can have high electrical properties and reliability, and a degree of freedom in design can be improved when the positive electrode is manufactured.

[Detailed Description of the Preferred Embodiments]

[Best Mode for Implementation of the Invention]

While the present invention may have various modifications and alternative forms, specific embodiments thereof will be described in detail.

However, it should be understood that there is no intent to limit the present invention to the particular forms disclosed, and on the contrary, the present invention is to cover all modifications, equivalents, and alternatives falling within the spirit and scope of the present invention.

It should be further understood that the terms "comprise," "comprising," "include," and/or "including," when used herein, specify the presence of stated features, integers, steps, operations, components, parts, or combinations thereof, but do not preclude the presence or addition of one or more other features, integers, steps, operations, components, parts, or combinations thereof.

In addition, when a layer, film, region, or plate is referred to as being "formed on" another layer, film, region, or plate, it includes a case in which the layer, film, region, or plate is formed directly on another layer, film, region, or plate and a case in which still another layer, film, region, or plate is interposed between the layer, film, region, or plate and another layer, film, region, or plate. In contrast, when a layer, film, region, or plate is referred to as being "formed below" another layer, film, region, or plate, it includes a case in which the layer, film, region, or plate is formed directly below another layer, film, region, or plate and a case in which still another layer, film, region, or plate is interposed between the layer, film, region, or plate and another layer, film, region, or plate. Further, in this specification, when a component is referred to as being disposed "on" another component, it includes a case in which a component is disposed above another component and a case in which a component is disposed below another component.

Further, in the present invention, the term "master batch for a positive electrode additive" may refer to a solid composition in which components used in manufacturing a positive electrode of a lithium secondary battery are shaped in the form of pellets having a millimeter size, and a non-reversible additive in the form of fine particles is included as the component in a higher content than the content of a non-reversible additive actually included in a positive electrode mixture layer. In this case, the term "high content" may be a content that is twice or more a content of the component contained in the positive electrode mixture layer.

In addition, in the present invention, the term "main component" may be a component in an amount of 50 wt% or more, 60 wt% or more, 70 wt% or more, 80 wt% or more, 90 wt% or more, 95 wt% or more, or 97.5 wt% or more with respect to a total weight of a composition or a specific component, and in some cases, may be a component constituting the entire composition or specific component, that is, a component in an amount of 100 wt%.

Further, in the present invention, "Ah" is a unit of capacity of a lithium secondary battery, is referred to as "ampere-hour," and is an amount of current per hour. For example, when a capacity of a battery is "3000 mAh," it means that the battery can be discharged for one hour with a current of 3000 mA.

Hereinafter, the present invention will be described in more detail.

## Master batch for positive electrode additive

In an embodiment, the present technology provides a master batch for a positive electrode additive, which includes 0.5 to 50 parts by weight of a lithium cobalt oxide represented by Chemical Formula 1 below with respect to 100 parts by weight of a first positive electrode active material:

[Chemical Formula 1] $Li_pCo_{1-q}M^1_qO_2$

In Chemical Formula 1 above, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.4$, respectively.

The master batch for a positive electrode additive according to the present technology is used for forming a positive electrode mixture layer of a positive electrode for a lithium secondary battery. Generally, in the case in which 2 wt% or less of an irreversible additive is included with respect to a total weight of a positive electrode mixture layer when the positive electrode mixture layer provided in a positive electrode is formed, the amount of the irreversible additive is significantly small so that the amount lost in the process is large, and it is difficult to uniformly disperse the irreversible additive so that there is a limitation in that the manufactured positive electrode and the lithium secondary battery including the same have low reliability. However, in the master batch for a positive electrode additive according to the present technology, a lithium cobalt oxide represented by Chemical Formula 1, which is used as an irreversible additive, may be included in a high content together with a first positive electrode active material, and may be uniformly dispersed in a positive electrode slurry without loss of the irreversible additive when the positive electrode mixture layer is formed.

In this case, the lithium cobalt oxide is included in the master batch as an irreversible additive that imparts an irreversible capacity together with the positive electrode active material exhibiting electrical activity, and includes a lithium cobalt oxide represented by Chemical Formula 1 below:

[Chemical Formula 1] $LiCo_{1-q}M^1_qO_2$

in Chemical Formula 1 above, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.4$, respectively.

Specifically, the lithium cobalt oxide may be applied without being particularly limited as long as it is a lithium cobalt oxide represented by Chemical Formula 1, and preferably, may include $Li_6CoO_4$, $Li_6Co_{0.5}Zn_{0.5}O_4$, $Li_6Co_{0.7}Zn_{0.3}O_4$, etc.

The lithium cobalt oxide represented by Chemical Formula 1 above includes a lithium cobalt oxide ($Li_pCoO_4$, $5 \leq p \leq 7$) that releases a large amount of lithium ions, or has a structure in which a transition metal is doped at a cobalt position of the lithium cobalt oxide. In this case, an amount of the doped transition metal may be less than or equal to a 40 mole fraction ($q \leq 0.4$), and specifically, may range from 20 to 40 mole fractions ($0.2 < q < 0.4$), 10 to 30 mole fractions ($0.1 \leq q \leq 0.3$), 15 to 30 mole fractions ($0.15 \leq q \leq 0.3$), 30 to 40 mole fractions ($0.3 \leq q \leq 0.4$), or 5 to 20 mole fractions ($0.05 \leq q \leq 0.2$). In the present technology, by adjusting the doping amount of the metal within the above molar fraction ranges, it is possible to release a large amount of lithium ions and reduce an amount of oxygen gas that is generated due to the release of the lithium ions.

Further, the lithium cobalt oxide represented by Chemical Formula 1 above may have a tetragonal crystal structure, and may have a space group of $P4_2/nmc$ among the tetragonal crystal structures.

In addition, the lithium cobalt oxide represented by Chemical Formula 1 above may be included in the master batch in an amount of 0.5 to 50 parts by weight with respect to 100 parts by weight of the first positive electrode active material, and specifically, may be included in the master batch in an amount of 0.5 to 40 parts by weight, 0.5 to 30 parts by weight, 0.5 to 25 parts by weight, 0.5 to 20 parts by weight, 0.5 to 10 parts by weight, 2 to 30 parts by weight, 2 to 15 parts by weight, 8 to 15 parts by weight, 8 to 28 parts by weight, 15 to 30 parts by weight, 9 to 22 parts by weight, or 4 to 11 parts by weight with respect to 100 parts by weight of the first positive electrode active material. In the present technology, by controlling the amount of the lithium cobalt oxide included in the master batch as described above, it is possible to prevent the irreversible additive from being non-uniformly dispersed because an amount of the master batch used in the positive electrode slurry is significantly reduced due to the excessive amount of irreversible additive contained in the master batch, and it is possible to prevent the master batch preparation efficiency from being lowered due to a small amount of the irreversible additive.

Further, an average particle size $D_{50}$ of the master batch for a positive electrode additive may range from 0.05 mm to 10 mm, and specifically, may range from 0.1 mm to 10 mm, 0.5 mm to 10 mm, 1 mm to 10 mm, 0.1 mm to 2mm, 5 mm to 10 mm, 1 mm to 5 mm, or 3 mm to 7 mm. In the present technology, by controlling the average particle size $D_{50}$ of the master batch for a positive electrode additive within the above range, it is possible to prevent loss of the irreversible additive and a change in composition of the positive electrode slurry due to scattering of the master batch when the positive electrode slurry is prepared, and it is possible to improve working process efficiency.

In addition, an average particle size $D_{50}$ of the first positive electrode active material may range from 0.5 to 100 $\mu$m, and an average particle size $D_{50}$ of the lithium cobalt oxide may range from 1 to 200 $\mu$m, wherein the average particle size of the lithium cobalt oxide may be greater than the average particle size of the first positive electrode active material. Specifically, the first positive electrode active material may have an average particle size $D_{50}$ of 1 to 100 $\mu$m, 5 to 100 $\mu$m, 10 to 100 $\mu$m, 25 to 100 $\mu$m, 50 to 100 $\mu$m, 10 to 50 $\mu$m, 5 to 10 $\mu$m, or 0.5 to 5 $\mu$m, and the lithium cobalt

oxide may have an average particle size $D_{50}$ of 5 to 200 μm, 10 to 200 μm, 50 to 200 μm, 100 to 200 μm, 150 to 200 μm, 110 to 150 μm, 80 to 120 μm, 50 to 100 μm, 10 to 50 μm, 5 to 20 μm, 40 to 60 μm, 50 to 80 μm, or 1 to 5 μm. In the present technology, by controlling the average particle sizes $D_{50}$ of the first positive electrode active material and the lithium cobalt oxide within the above range, it is possible to increase the charge/discharge capacity and efficiency of the manufactured lithium secondary battery, and it is possible to reduce an amount of oxygen gas generated from the lithium cobalt oxide that releases a large amount of lithium ions. In addition, by containing a larger irreversible additive than the first positive electrode active material, a side reaction of the irreversible additive may be reduced.

Further, in order to shape the first positive electrode active material and the lithium cobalt oxide represented by Chemical Formula 1 in the form of pellets having a millimeter-scale size, the master batch for a positive electrode additive according to the present technology may further include 1 to 10 parts by weight of a first binder with respect to 100 parts by weight of the first positive electrode active material contained in the master batch, and specifically, may further include 1 to 5 parts by weight, 5 to 10 parts by weight, 3 to 8 parts by weight, or 4 to 6 parts by weight of the first binder with respect to 100 parts by weight of the first positive electrode active material.

Here, the first binder may be used without being particularly limited as long as it can be commonly used in the positive electrode mixture layer. For example, the first binder may include one or more resins selected from the group consisting of a polyvinylidene fluoride-hexafluoropropylene copolymer (PVdF-co-HFP), polyvinylidene fluoride (PVdF), polyacrylonitrile, polymethylmethacrylate, and copolymers thereof. As an example, the first binder may include polyvinylidene fluoride.

As described above, in the present technology, by controlling the composition of the master batch for a positive electrode additive, a small amount of irreversible additive may be dispersed in the positive electrode slurry with high dispersion without loss when the positive electrode is manufactured, and thus it is possible to improve the performance and reliability of the manufactured lithium secondary battery.

## Positive electrode slurry for lithium secondary battery

Further, in an embodiment, the present technology provides a positive electrode slurry for a lithium secondary battery, including the master batch for a positive electrode additive according to the present technology, which includes 0.5 to 50 parts by weight of a lithium cobalt oxide represented by Chemical Formula 1 below with respect to 100 parts by weight of a first positive electrode active material, a second positive electrode active material, a conductive material, and a second binder.

[Chemical Formula 1] $Li_pCo_{1-q}M^1{}_qO_2$

In Chemical Formula 1 above, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.4$, respectively.

The positive electrode slurry for a lithium secondary battery according to the present technology is for forming a positive electrode mixture layer provided in a positive electrode for a lithium secondary battery, and includes the above-described master batch for a positive electrode additive, the second positive electrode active material, the conductive material, and the second binder.

Here, the positive electrode slurry may include the above-described master batch for a positive electrode additive according to the present technology in an amount of 1 to 150 parts by weight with respect to 100 parts by weight of the second positive electrode active material. More specifically, the positive electrode slurry may include the master batch for a positive electrode additive in an amount of 120 to 150 parts by weight, 1 to 100 parts by weight, 1 to 50 parts by weight, 1 to 30 parts by weight, 1 to 20 parts by weight, 1 to 9 parts by weight, 2 to 19 parts by weight, 4 to 17 parts by weight, 20 to 30 parts by weight, 10 to 20 parts by weight, or 1 to 7 parts by weight with respect to 100 parts by weight of the second positive electrode active material.

Further, the positive electrode slurry may include the lithium cobalt oxide represented by Chemical Formula 1 above, which is contained in the master batch and is an irreversible additive, in an amount of 0.05 to 2.0 parts by weight with respect to 100 parts by weight of the total amount of the positive electrode slurry. More specifically, the positive electrode slurry may include the lithium cobalt oxide represented by Chemical Formula 1 above in an amount of 0.05 to 1.5 parts by weight, 0.05 to 1.0 parts by weight of 0.05 to 0.5 parts by weight, 0.1 to 1.5 parts by weight, 0.1 to 1.0 parts by weight, or 0.1 to 0.9 parts by weight with respect to 100 parts by weight of the total amount of the positive electrode slurry.

In the present technology, by controlling the amounts of the master batch for a positive electrode additive and the lithium cobalt oxide represented by Chemical Formula 1 above, which are contained in the positive electrode slurry, within the above range, it is possible to increase the dispersibility of the lithium cobalt oxide in the positive electrode slurry, and it is possible to maximize the charge/discharge capacity of the manufactured lithium secondary battery.

Meanwhile, the positive electrode slurry according to the present technology may include the first positive

electrode active material, which is contained in the master batch for a positive electrode additive, and the second positive electrode active material, as materials capable of reversible intercalation and deintercalation, and in this case, each of the first positive electrode active material and the second positive electrode active material may include a lithium metal composite oxide represented by Chemical Formula 2 below, wherein components of the lithium metal composite oxides may be the same or different.

[Chemical Formula 2] $Li_x[Ni_yCo_zMn_wM^2_v]O_u$

In Chemical Formula 2 above, $M^2$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0 \le x \le 1.30$, $0.01 \le y < 1$, $0.01 < z \le 0.6$, $0.1 < w \le 0.6$, $0 \le v \le 0.2$, and $1.5 \le u \le 5$, respectively.

The lithium metal composite oxide represented by Chemical Formula 2 above is a composite metal oxide including lithium, nickel, cobalt, and manganese, and in some cases, may have a form in which another transition metal $M^2$ is doped. For example, the first positive electrode active material and the second positive electrode active material may each independently include one or more compounds selected from the group consisting of $LiNi_{1/3}Co_{1/3}Mn_{1/3}O_2$, $LiNi_{0.6}Co_{0.2}Mn_{0.2}O_2$, $LiNi_{0.8}Co_{0.1}Mn_{0.1}O_2$, $LiNi_{0.9}Co_{0.05}Mn_{0.05}O_2$, $LiNi_{0.8}Co_{0.1}Mn_{0.05}Al_{0.05}O_2$, and $LiNi_{0.7}Co_{0.1}Mn_{0.1}Al_{0.1}O_2$. As an example, the first positive electrode active material and the second positive electrode active material may each use $LiNi_{0.6}Co_{0.2}Mn_{0.2}O_2$ and $LiNi_{0.8}Co_{0.1}Mn_{0.1}O_2$ alone or in combination as the lithium metal composite oxide represented by Chemical Formula 2 above.

Further, a total amount of the first positive electrode active material and the second positive electrode active material may range from 85 to 95 parts by weight with respect to 100 parts by weight of the positive electrode slurry, and specifically, may range from 88 to 95 parts by weight, 90 to 95 parts by weight, 86 to 90 parts by weight, or 92 to 95 parts by weight.

Furthermore, the positive electrode slurry may further include a conductive material and a second binder together with the first positive electrode active material and the second positive electrode active material, and in some cases, may further include another additive or the like which is capable of improving the physical properties of the positive electrode.

In this case, the conductive material may be used to improve the performance of the positive electrode, such as electrical conductivity or the like, and may include one or more carbon-based materials selected from the group consisting of natural graphite, artificial graphite, carbon black, acetylene black, Ketjen black, and carbon fibers. For example, the conductive material may include acetylene black.

Further, the conductive material may be included in an amount of 1 to 5 parts by weight with respect to 100 parts by weight of the total amount of the positive electrode slurry, and specifically, may be included in an amount of 1 to 4 parts by weight or 2 to 4 parts by weight.

In addition, the components of the second binder may be the same or different from the first binder contained in the master batch for a positive electrode additive. Specifically, examples of the second binder may include one or more resins selected from the group consisting of a polyvinylidene fluoride-hexafluoropropylene copolymer (PVdF-co-HFP), polyvinylidene fluoride (PVdF), polyacrylonitrile, polymethylmethacrylate, and copolymers thereof. As an example, the second binder may include polyvinylidene fluoride.

Further, the second binder may be included in an amount of 1 to 5 parts by weight with respect to 100 parts by weight of the total amount of the positive electrode slurry, and specifically, may be included in an amount of 1 to 4 parts by weight or 2 to 4 parts by weight. In addition, a total amount of the first binder contained in the master batch for a positive electrode additive and the second binder may not exceed 6 parts by weight with respect to 100 parts by weight of the total amount of the positive electrode slurry.

In the present technology, by controlling the composition of the positive electrode slurry for a lithium secondary battery as described above, it is possible to prepare a positive electrode slurry in which a small amount of irreversible additive is quantitatively and uniformly dispersed without loss, and thus there are advantages in that the positive electrode for a lithium secondary battery manufactured using the positive electrode slurry may have high electrical properties and reliability, and a degree of freedom in design may be improved when the positive electrode is manufactured.

## Positive electrode for lithium secondary battery

In addition, in an embodiment, the present technology provides a positive electrode for a lithium secondary battery, having a structure in which a positive electrode current collector, a first positive electrode mixture layer, and the second positive electrode mixture layer are sequentially laminated, wherein each of the first positive electrode mixture layer and the second positive electrode mixture layer is formed using the above-described positive electrode slurry for a lithium secondary battery according to the present technology.

The positive electrode for a lithium secondary battery according to the present technology includes a first

positive electrode mixture layer and a second positive electrode mixture layer, respectively, prepared by applying, drying, and pressing the above-described positive electrode slurry according to the present technology onto the positive electrode current collector.

Here, in order to increase the irreversible efficiency of a lithium cobalt oxide represented by Chemical Formula 1 below, which is an irreversible additive, during initial charging and discharging, the amounts of the lithium cobalt oxides represented by Chemical Formula 1 below included in the first positive electrode mixture layer and the second positive electrode mixture layer may be different:

[Chemical Formula 1] $Li_pCo_{1-q}M^1_qO_2$

In Chemical Formula 1 above, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.4$, respectively.

Specifically, the amount of the lithium cobalt oxide represented by Chemical Formula 1 above contained in the first positive electrode mixture layer may range from 0.5 to 2.0 parts by weight with respect to 100 parts by weight of the first positive electrode mixture layer, and the amount of the lithium cobalt oxide represented by Chemical Formula 1 above contained in the second positive electrode mixture layer may range from 0.01 to 0.5 parts by weight with respect to 100 parts by weight of the second positive electrode mixture layer.

More specifically, the first positive electrode mixture layer may include the lithium cobalt oxide represented by Chemical Formula 1 above in an amount of 0.5 to 1.5 parts by weight, 0.5 to 1.0 parts by weight, 0.5 to 0.9 parts by weight, 0.8 to 1.3 parts by weight, or 0.5 to 0.7 parts by weight with respect to 100 parts by weight of the total amount of the first positive electrode mixture layer. Further, the second positive electrode mixture layer may include the lithium cobalt oxide represented by Chemical Formula 1 above in an amount of 0.05 to 0.5 parts by weight, 0.05 to 0.35 parts by weight, 0.01 to 0.4 parts by weight, 0.01 to 0.3 parts by weight, 0.1 to 0.4 parts by weight, or 0.01 to 0.09 parts by weight with respect to 100 parts by weight of the total amount of the second positive electrode mixture layer.

As an example, the lithium cobalt oxide represented by Chemical Formula 1 above may be included in the first positive electrode mixture layer in an amount of $0.6 \pm 0.05$ parts by weight with respect to 100 parts by weight of the total amount of the first positive electrode mixture layer, and may be included in the second positive electrode mixture layer in an amount of $0.2 \pm 0.05$ parts by weight with respect to 100 parts by weight of the total amount of the second positive electrode mixture layer.

Furthermore, in the positive electrode for a lithium secondary battery according to the present technology, a total amount of the lithium cobalt oxides represented by Chemical Formula 1 contained in the entire positive electrode mixture layer including the first positive electrode mixture layer and the second positive electrode mixture layer may be less than or equal to 0.5 parts by weight with respect to 100 parts by weight of the total amount of the positive electrode active materials included in the two positive electrode mixture layers, that is, the first positive electrode active material and the second positive electrode active material. More specifically, the total amount of the lithium cobalt oxides contained in the entire positive electrode mixture layer of the positive electrode may range from 0.01 to 0.5 parts by weight, 0.1 to 0.5 parts by weight, 0.05 to 0.4 parts by weight, 0.05 to 0.25 parts by weight, 0.1 to 0.4 parts by weight, 0.2 to 0.5 parts by weight, 0.1 to 0.3 parts by weight, or 0.4 to 0.5 parts by weight with respect to a total of 100 parts by weight of the first positive electrode active material and the second positive electrode active material.

In the present technology, by controlling the total amount of the lithium cobalt oxide represented by Chemical Formula 1 contained in the entire positive electrode mixture layer within the above range, it is possible to effectively replenish lithium ions consumed by irreversible reactions during the initial charging and discharging of the lithium secondary battery, and it is possible to prevent a large amount of oxygen gas from being generated due to an additionally generated side reaction or a subsequent reaction generated due to residual materials.

Here, the amount of the lithium cobalt oxide contained in the positive electrode mixture layer may be adjusted by controlling the amount of the lithium cobalt oxide contained in the above-described positive electrode slurry of the present technology and average thicknesses of the respective layers. To this end, the average thickness of the second positive electrode mixture layer may be greater than the average thickness of the first positive electrode mixture layer. Specifically, a ratio of the average thickness of the first positive electrode mixture layer to the average thickness of the second positive electrode mixture layer may be adjusted to be in a range of 0.1 to 0.9, and more specifically, may be adjusted to be in a range of 0.1 to 0.8, 0.1 to 0.6, 0.1 to 0.5, 0.1 to 0.3, 0.3 to 0.6, 0.4 to 0.8, 0.2 to 0.5, or 0.6 to 0.9.

Meanwhile, a total thickness of the first positive electrode mixture layer and the second positive electrode mixture layer is not particularly limited, but may specifically range from 50 μm to 300 μm, and more specifically, may range from 100 μm to 200 μm, 80 μm to 150 μm, 120 μm to 170 μm, 150 μm to 300 μm, 200 μm to 300 μm, or 150 μm to 190 μm.

Further, as the positive electrode current collector of the positive electrode, a material having high conductivity without causing a chemical change in the battery may be used. For example, stainless steel, aluminum, nickel, titanium,

calcined carbon, or the like may be used, and when aluminum or stainless steel is used, a material surface-treated with carbon, nickel, titanium, silver, or the like may be used. Further, the positive electrode current collector may have fine irregularities formed on a surface thereof to increase an adhesive force of the positive electrode active material, and may be formed in various forms such as a film, a sheet, a foil, a net, a porous body, a foam body, a nonwoven body, and the like. In addition, an average thickness of the positive electrode current collector may be appropriately applied in a range of 3 to 500 μm in consideration of the conductivity and total thickness of the positive electrode to be manufactured.

## Lithium secondary battery

Furthermore, in an embodiment, the present technology provides a lithium secondary battery including the above-described positive electrode according to the present technology, a negative electrode, and a separator interposed between the positive electrode and the negative electrode.

The lithium secondary battery according to the present technology may include the positive electrode of the present technology described above to induce delithiation of the positive electrode additive at a high rate under a low voltage condition of less than or equal to an available voltage during initial charging, and thus an amount of oxygen gas generated during subsequent charging and discharging is significantly small, and accordingly, there is an advantage in that electrical performance and safety of the lithium secondary battery are excellent.

The lithium secondary battery of the present technology has a structure including a positive electrode, a negative electrode, and a separator interposed between the positive electrode and the negative electrode.

Here, the negative electrode may be manufactured by applying, drying, and pressing a negative electrode active material on a negative electrode current collector, and may optionally further include the same conductive material, an organic binder polymer, an additive, and the like as in the positive electrode as necessary.

Further, examples of the negative electrode active material may include carbon and graphite materials, such as hard carbon, artificial graphite, expanded graphite, carbon fibers, non-graphitizable carbon, carbon black, carbon nanotubes, fullerenes, activated carbon, and the like, in which graphite having a completely layered crystal structure such as natural graphite, soft carbon having a low crystallinity layered crystal structure (graphene structure; a structure in which hexagonal honeycomb planes of carbon are arranged in layers), and a mixture of these structures with amorphous parts, metal complex oxides such as $Li_xFe_2O_3(0\leq x\leq 1)$, $Li_xWO_2(0\leq x\leq 1)$, $Sn_xMe_{1-x}Me'_yO_z$ (Me: Mn, Fe, Pb, Ge; Me': Al, B, P, Si, groups 1, 2, and 3 elements of the periodic table, halogens; $0<x\leq 1$; $1\leq y\leq 3$; and $1\leq z\leq 8$), and the like, lithium metal, lithium alloys, silicon-based alloys, tin-based alloys, metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, and the like, conductive polymers such as polyacetylene and the like, Li-Co-Ni-based materials, titanium oxide, lithium titanium oxide, and the like.

As an example, the negative electrode active material may include both graphite and silicon (Si)-containing particles, the graphite may include any one or more of natural graphite having a layered crystal structure and artificial graphite having an isotropic structure, and the silicon (Si)-containing particles may include silicon (Si) particles, silicon oxide ($SiO_2$) particles, or a mixture of the silicon (Si) particles and the silicon oxide ($SiO_2$) particles as particles including silicon (Si) serving as a metal component as a main component.

In this case, the negative electrode active material may include 80 to 95 parts by weight of graphite and 1 to 20 parts by weight of silicon (Si)-containing particles with respect to 100 parts by weight of the total amount of the negative electrode active material. In the present technology, by adjusting the amounts of graphite and silicon (Si)-containing particles contained in the negative electrode active material within the above range, the charging capacity per unit mass may be improved while reducing lithium consumption and irreversible capacity loss during initial charging and discharging of the battery.

Further, the negative electrode mixture layer may have an average thickness of 100 μm to 200 μm, and specifically, may have an average thickness of 100 μm to 180 μm, 100 μm to 150 μm, 120 μm to 200 μm, 140 μm to 200 μm, or 140 μm to 160 μm.

In addition, the negative electrode current collector is not particularly limited to any current collector as long as it has high conductivity without causing a chemical change in the battery, and for example, a copper, stainless steel, nickel, titanium, calcined carbon, or the like may be used, and when copper or stainless steel is used, a material surface-treated with carbon, nickel, titanium, silver, or the like may be used. Further, the negative electrode current collector, like the positive electrode current collector, may have fine irregularities formed on a surface thereof to strengthen a bonding force with the negative electrode active material, and may be formed in various forms such as a film, a sheet, a foil, a net, a porous body, a foam body, a nonwoven body, and the like. In addition, an average thickness of the negative electrode current collector may be appropriately applied in a range of 3 to 500 μm in consideration of the conductivity and total thickness of a negative electrode to be manufactured.

Further, the separator is interposed between the positive electrode and the negative electrode, and an insulating thin film having high ion permeability and mechanical strength is used. The separator is not particularly limited as long

as it is commonly used in the art, and specifically, a sheet or non-woven fabric made of chemical-resistant and hydrophobic polypropylene, glass fiber, polyethylene, or the like may be used, and in some cases, a composite separator in which a porous polymer base material such as a sheet or nonwoven fabric is coated with inorganic particles/organic particles by an organic binder polymer may be used. When a solid electrolyte such as a polymer or the like is used as an electrolyte, the solid electrolyte may also serve as a separator. In addition, pores of the separator may have an average diameter of 0.01 to 10 $\mu$m and an average thickness of 5 to 300 $\mu$m.

Meanwhile, the positive electrode and the negative electrode may be wound in the form of a jelly roll, and may be accommodated in a cylindrical battery, a prismatic battery, or a pouch-type battery or accommodated in a pouch-type battery in a folding or stack-and-folding form, but the present technology is not limited thereto.

Further, a lithium salt-containing electrolyte according to the present technology may consist of an electrolyte and a lithium salt, and examples of the lithium salt-containing electrolyte may include a non-aqueous organic solvent, an organic solid electrolyte, an inorganic solid electrolyte, and the like.

Examples of the non-aqueous organic solvent may include an aprotic organic solvent such as N-methyl-2-pyrrolidinone, ethylene carbonate, propylene carbonate, butylene carbonate, dimethyl carbonate, diethyl carbonate, gamma-butyrolactone, 1,2-dim ethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, etc.

Examples of the organic solid electrolyte may include polyethylene derivatives, polyethylene oxide derivatives, polypropylene oxide derivatives, phosphoric acid ester polymers, poly agitation lysine, polyester sulfide, polyvinyl alcohol, polyvinylidene fluoride, polymeric materials containing ionic dissociation groups, etc.

Examples of the inorganic solid electrolyte may include nitrides, halides, sulfates, etc. of Li such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, or the like.

The lithium salt is a material that is easily soluble in a non-aqueous electrolyte, and examples of the lithium salt may include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lithium lower aliphatic carboxylates, lithium tetraphenylboronate, imide, etc.

Further, for the purpose of improving charging and discharging characteristics, flame retardancy, etc., pyridine, triethylphosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, etc. may be added to the electrolyte. In some cases, in order to impart incombustibility, a halogen-containing solvent such as carbon tetrachloride, ethylene trifluoride, etc. may be further included, and in order to improve high-temperature storage characteristics, carbon dioxide gas may further included and fluoroethylene carbonate (FEC), propene sultone (PRS), etc. may further included.

[Mode for Implementation of the Invention]

Hereinafter, the present invention will be described in more detail with reference to examples and comparative examples.

However, the examples and comparative examples described below are merely intended to illustrate the present invention, and the content of the present invention is not limited to the examples and comparative examples described below.

**Examples 1 to 4 and Comparative Examples 1 and 2. Preparation of master batch for positive electrode additive**

$LiNi_{0.6}Co_{0.2}Mn_{0.2}O_2$ (average particle size $D_{50}$: 1$\pm$0.05 $\mu$m) as a first positive electrode active material, $Li_6Co_{0.7}Zn_{0.3}O_4$ (average particle size $D_{50}$: 3$\pm$0.05 $\mu$m) as an irreversible additive, and PVdF as a first binder were prepared, weighed as shown in Table 1 below, and introduced into a reactor. Then, the above components were uniformly dried for about 90 minutes and mixed to prepare a master batch for a positive electrode additive having an average particle size $D_{50}$ of 0.3$\pm$0.005 mm and a pellet form.

[Table 1]

| | Example 1 | Example 2 | Example 3 | Example 4 | Comparative Example 1 | Comparative Example 2 |
|---|---|---|---|---|---|---|
| $LiNi_{0.6}Co_{0.2}M_{0.2}O_2$ | 100 parts by weight | | | | | |
| $Li_6Co_{0.7}Zn_{0.3}O_4$ | 1 part by weight | 5parts by weight | 10 parts by weight | 25 parts by weight | 100 parts by weight | 200 parts by weight |

(continued)

| | Example 1 | Example 2 | Example 3 | Example 4 | Comparative Example 1 | Comparative Example 2 |
|---|---|---|---|---|---|---|
| PVdF | 5 parts by weight | 5 parts by weight | 5 parts by weight | 5 parts by weight | 5 parts by weight | 5 parts by weight |

**Examples 5 to 10 and Comparative Examples 3 to 6. Preparation of second positive slurry and positive electrode for lithium secondary battery**

The master batch for a positive electrode additive prepared in each of Examples 1 to 4 and Comparative Examples 1 to 2 above, $LiNi_{0.6}Co_{0.2}Mn_{0.1}Al_{0.1}O_2$ as a second positive electrode active material, acetylene black as a conductive material, and PVdF as a second binder were prepared, weighed as shown in Tables 2 and 3 below, and introduced into a reactor together with N-methylpyrrolidone (NMP). Then, the above components were mixed at 3,000 rpm for about 60 minutes to prepare a first positive electrode slurry and a second positive electrode slurry for respectively forming a first positive electrode mixture layer and a second positive electrode mixture layer.

Then, the first positive electrode slurry and the second positive electrode slurry were sequentially applied onto one surface of an aluminum current collector having a size of 10 cm×20 cm, dried at 100 °C, and rolled and pressed to manufacture a positive electrode. In this case, a total thickness of the positive electrode mixture layers was 130 μm, and a total thickness of the manufactured positive electrode was about 200 μm. Further, a ratio of an average thickness $T_{1st}$ of the first positive electrode mixture layer to an average thickness $T_{2nd}$ of the second positive electrode mixture layer, that is, a ratio ($T_{1st}/T_{2nd}$) of the average thickness of the first positive electrode mixture layer to the average thickness of the second positive electrode mixture layer, is shown in Tables 2 and 3 below, and a content ratio of components shown in Tables 2 and 3 below may be the same in the positive electrode slurry and the positive electrode mixture layer.

[Table 2]

| Units: parts by weight | | Example 5 | Example 6 | Example 7 | Example 8 | Example 9 | Example 10 |
|---|---|---|---|---|---|---|---|
| First positive electrode mixture layer | $LiNi_{0.6}Co_{0.2}Mn_{0.1}Al_{0.1}O_2$ | 37.5 | 82.5 | 88.2 | 91.6 | 81.1 | 92.7 |
| | Type of master batch | Master batch of Example 1 | Master batch of Example 2 | Master batch of Example 3 | Master batch of Example 4 | Master batch of Example 3 | Master batch of Example 3 |
| | Amount of master batch | 59.7 | 12.4 | 6.5 | 2.9 | 13.9 | 1.7 |
| | Acetylene black | 2.8 | 2.8 | 2.8 | 2.8 | 2.8 | 2.8 |
| | PVdF | 0 | 2.3 | 2.5 | 2.7 | 2.2 | 2.8 |
| | Total amount | 100 | 100 | 100 | 100 | 100 | 100 |
| Amount of $Li_6Co_{0.7}Zn_{0.3}O_4$ in first positive electrode mixture layer (with respect to 100 parts bv weight) | | 0.6 | 0.6 | 0.6 | 0.6 | 1.3 | 0.15 |

(continued)

| Units: parts by weight | | Example 5 | Example 6 | Example 7 | Example 8 | Example 9 | Example 10 |
|---|---|---|---|---|---|---|---|
| Second positive electrode mixture layer | $LiNi_{0.6}Co_{0.2}Mn_{0.1}Al_{0.1}O_2$ | 75.3 | 90.4 | 92.3 | 93.4 | 89.2 | 93.8 |
| | Type of master batch | Master batch of Example 1 | Master batch of Example 2 | Master batch of Example 3 | Master batch of Example 4 | Master batch of Example 3 | Master batch of Example 3 |
| | Amount of master batch | 20.0 | 4.2 | 2.2 | 1.0 | 5.4 | 0.6 |
| | Acetylene black | 2.8 | 2.8 | 2.8 | 2.8 | 2.8 | 2.8 |
| | PVdF | 1.9 | 2.6 | 2.7 | 2.8 | 2.6 | 2.8 |
| | Total amount | 100 | 100 | 100 | 100 | 100 | 100 |
| Amount of $Li_6Co_{0.7}Zn_{0.3}O_4$ in second positive electrode mixture layer (with respect to 100 parts by weight) | | 0.2 | 0.2 | 0.2 | 0.2 | 0.5 | 0.05 |
| Amount of $Li_6Co_{0.7}Zn_{0.3}O_4$ in entire positive electrode mixture layer (with respect to 100 parts by weight) | | 0.5 | 0.5 | 0.5 | 0.5 | 0.5 | 0.25 |
| $T_{1st}/T_{2nd}$ | | 0.8 | 0.8 | 0.8 | 0.8 | 0.1 | 0.9 |

[Table 3]

| Units: parts by weight | | Comparative Example 3 | Comparative Example 4 | Comparative Example 5 | Comparative Example 6 |
|---|---|---|---|---|---|
| First positive electrode mixture layer | $LiNi_{0.6}Co_{0.2}Mn_{0.1}Al_{0.1}O_2$ | 93.2 | 93.5 | 92.4 | 36.7 |
| | Type of master batch | Master batch of Comparative Example 1 | Master batch of Comparative Example 2 | Master batch of Example 2 | Master batch of Example 2 |
| | Amount of master batch | 1.2 | 0.9 | 2.1 | 60.5 |
| | Acetylene black | 2.8 | 2.8 | 2.8 | 2.8 |
| | PVdF | 2.8 | 2.8 | 2.7 | 0 |
| | Total amount | 100 | 100 | 100 | 100 |
| Amount of $Li_6Co_{0.7}Zn_{0.3}O_4$ in first positive electrode mixture layer (with respect to 100 parts by weight) | | 0.6 | 0.6 | 0.1 | 3.0 |
| Second positive electrode mixture layer | $LiNi_{0.6}Co_{0.2}Mn_{0.1}Al_{0.1}O_2$ | 94.0 | 94.1 | 94.3 | 74.8 |
| | Type of master batch | Master batch of Comparative Example 1 | Master batch of Comparative Example 2 | Master batch of Example 2 | Master batch of Example 2 |
| | Amount of master batch | 0.4 | 0.3 | 0.1 | 20.5 |

(continued)

| Units: parts by weight | | Comparative Example 3 | Comparative Example 4 | Comparative Example 5 | Comparative Example 6 |
|---|---|---|---|---|---|
| | Acetylene black | 2.8 | 2.8 | 2.8 | 2.8 |
| | PVdF | 2.8 | 2.8 | 2.8 | 1.9 |
| | Total amount | 100 | 100 | 100 | 100 |
| Amount of $Li_6Co_{0.7}Zn_{0.3}O_4$ in second positive electrode mixture layer (with respect to 100 parts by weight) | | 0.2 | 0.2 | 0.001 | 1.0 |
| Amount of $Li_6Co_{0.7}Zn_{0.3}O_4$ in entire positive electrode mixture layer (with respect to 100 parts by weight) | | 0.5 | 0.5 | 0.08 | 1.3 |
| $T_{1st}/T_{2nd}$ | | 0.8 | 0.8 | 0.9 | 0.1 |

**Experimental Example.**

In order to evaluate the performance of the master batch according to the present technology, a positive electrode slurry for a lithium secondary battery containing the master batch, and a positive electrode, experiments described below were performed.

A) Evaluation of oxygen gas generation amount during initial charging and discharging

A negative electrode active material in which natural graphite and silicon particles (Si purity: ≥99.8%) were mixed in an 85:15 weight ratio was prepared, and 3 parts by weight of styrene-butadiene rubber (SBR) as a binder was mixed with respect to 100 parts by weight of the prepared negative electrode active material to prepare a negative electrode slurry. The prepared negative electrode slurry was applied onto one surface of a copper current collector having a size of 10 cm×20 cm, and dried to form a negative electrode mixture layer (average thickness: 120 μm). In this case, a temperature of the circulated air was 80 °C. Then, the prepared negative electrode slurry was rolled and pressed, and dried in a vacuum oven at 130 °C for 12 hours to manufacture a negative electrode.

A separator (thickness: about 16 μm) made of a porous polyethylene (PE) film was interposed between the positive electrodes manufactured in Examples and Comparative Examples and the manufactured negative electrode, and E2DVC serving as an electrolyte was added to manufacture a full-cell type cell.

Here, the "E2DVC" is a type of carbonate-based electrolyte, and is a solution obtained by mixing lithium hexafluorophosphate ($LiPF_6$, 1.0M) and vinyl carbonate (VC, 2 wt%) in a mixture of ethylene carbonate (EC):dimethyl carbonate (DMC):diethyl carbonate (DEC)=1:1:1 (volume ratio).

The manufactured full cell was charged at a temperature of 25 °C with a charging current of 0.1 C to a charging termination voltage of 4.2 V to 4.25 V, and was activated by being charged until a current density reached 0.01 C at a voltage of 0.02 V. In this case, an amount of generated oxygen gas was measured, and results of the measurement are shown in Table 4 below.

B) Evaluation of initial charge/discharge capacity and capacity retention rate

Full cells were manufactured in the same method as the manufacturing method of the full cell manufactured when the amount of generated oxygen gas was measured, by using the positive electrodes manufactured in Examples and Comparative Examples. Each of the manufactured full cells was charged at a temperature of 25 °C with a charging current of 0.1 C to a charging termination voltage of 4.2 V to 4.25 V, and were activated by being charged until a current density reached 0.01 C at a voltage of 0.02 V. Thereafter, each of the manufactured full cells was discharged to a final voltage of 2V with a discharge current of 0.05C, and the resistance of the electrode and the initial charge/discharge capacity per unit mass were measured.

Then, for the full cells that were activated, a capacity retention rate [%] was measured while the full cells were charged and discharged 100 times (n=100) at 25 °C under conditions of a charging termination voltage of 4.25 V, a discharging termination voltage of 2.5 V, and 0.5 C/0.5 C. In this case, the capacity retention rate was calculated using Expression 1 below, and results of the calculation are shown in Table 4 below:

[Expression 1]

$$\text{Capacity retention rate (\%)} = (\text{discharge capacity at n times of charging/discharging/discharge capacity at one time of charging/discharging}) \times 100$$

C) Battery resistance evaluation

Full cells were manufactured by using the positive electrodes prepared in Examples and Comparative Examples in the same manner as in the manufacturing method of the full cell manufactured when the amount of generated oxygen gas was measured. Fast charging was performed on the manufactured full cells for 10 seconds to achieve SOC 50%, the sheet resistance of the charged secondary batteries was measured using electrochemical impedance spectroscopy (EIS), and results of the measurement are shown in Table 4 below.

[Table 4]

| | Oxygen gas amount [mL/g] | Initial charge capacity [mAh] | Charge/discharge capacity retention rate [%] | Sheetresistance [Ω] |
|---|---|---|---|---|
| Example 5 | 161 | 104.2 | 90.6% | 0.61 |
| Example 6 | 165 | 104.8 | 90.8% | 0.59 |
| Example 7 | 174 | 105.1 | 91.2% | 0.56 |
| Example 8 | 188 | 105.7 | 91.5% | 0.53 |
| Example 9 | 467 | 109.5 | 92.3% | 0.70 |
| Example 10 | 152 | 104.3 | 90.1% | 0.43 |
| Comparative Example 3 | 151 | 104.0 | 90.2% | 0.88 |
| Comparative Example 4 | 158 | 103.6 | 90.1% | 0.74 |
| Comparative Example 5 | 103 | 103.1 | 88.9% | 0.41 |
| Comparative Example 6 | 739 | 106.4 | 93.8% | 0.89 |

As shown in Table 4, it can be seen that the positive electrode slurry according to the present technology includes a master batch containing a high content of irreversible additive so that dispersibility of the irreversible additive is excellent, and thus most of the irreversible additive reacts in the activation operation to realize high charge capacity and a high charge/discharge capacity retention rate and exhibit low sheet resistance.

More specifically, it was found that the lithium secondary batteries of Examples that used the master batches of Examples 1 to 4 containing a high content of lithium cobalt oxide represented by Chemical Formula 1, which is an irreversible additive, in the positive electrode mixture layer have a configuration in which an irreversible additive having a significantly small content of 0.55 to 1.8 parts by weight with respect to 100 parts by weight of the total amount of the positive electrode mixture layer is uniformly dispersed in the positive electrode mixture layer without loss, an amount of generated oxygen gas increases as the irreversible additive reacts at a high rate in the activation operation, and accordingly, it was confirmed that the initial charge capacity is high. Further, it was found that an increase in sheet resistance due to the use of the irreversible additive is improved.

It was confirmed from the above results that the master batch for a positive electrode additive according to the present technology contains a high content of irreversible additive together with a positive electrode active material so that a small amount of irreversible additive is dispersed in the positive electrode slurry with high dispersion without loss when the positive electrode is manufactured, and thus the positive electrode for a lithium secondary battery manufactured using the irreversible additive may have high electrical properties and reliability, and a degree of freedom in design may be improved when the positive electrode is manufactured.

While exemplary embodiments of the present invention and their advantages have been described above in detail, it should be understood by those skilled in the art that various changes, substitutions and alterations may be made herein without departing from the scope of the invention as defined by the following claims.

Therefore, the technical scope of the present invention should not be limited to the contents described in the detailed description of the specification, but should be defined by the appended claims.

## Claims

1. A master batch for a positive electrode additive, comprising 0.5 to 50 parts by weight of a lithium cobalt oxide represented by Chemical Formula 1 below with respect to 100 parts by weight of a first positive electrode active material:

   [Chemical Formula 1] $Li_pCo_{1-q}M^1_qO_2$

   in Chemical Formula 1 above, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \le p \le 7$ and $0 \le q \le 0.4$, respectively.

2. The master batch of claim 1, wherein the master batch further includes 1 to 10 parts by weight of a first binder with respect to 100 parts by weight of the first positive electrode active material.

3. The master batch of claim 1, wherein an average particle size ($D_{50}$) of the master batch for the positive electrode additive ranges from 0.05 mm to 10 mm.

4. The master batch of claim 1, wherein:

   an average particle size ($D_{50}$) of the first positive electrode active material ranges from 0.5 to 100 μm; and
   an average particle size ($D_{50}$) of the lithium cobalt oxide ranges from 1 to 200 μm,
   wherein the average particle size of the lithium cobalt oxide is greater than the average particle size of the first positive electrode active material.

5. A positive electrode slurry for a lithium secondary battery, comprising:

   the master batch for a positive electrode additive according to claim 1, which includes 0.5 to 50 parts by weight of a lithium cobalt oxide represented by Chemical Formula 1 below with respect to 100 parts by weight of a first positive electrode active material;
   a second positive electrode active material;
   a conductive material; and
   a second binder:

   [Chemical Formula 1] $Li_pCo_{1-q}M^1_qO_2$

   in Chemical Formula 1 above, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \le p \le 7$ and $0 \le q \le 0.4$, respectively.

6. The positive electrode slurry of claim 5, wherein the lithium cobalt oxide represented by Chemical Formula 1 contained in the master batch is included in an amount of 0.05 to 2.0 parts by weight with respect to 100 parts by weight of a total amount of the positive electrode slurry.

7. The positive electrode slurry of claim 5, wherein the master batch for the positive electrode additive is included in an amount of 1 to 150 parts by weight with respect to 100 parts by weight of the second positive electrode active material.

8. The positive electrode slurry of claim 5, wherein each of the first positive electrode active material and the second positive electrode active material includes a lithium metal composite oxide represented by Chemical Formula 2:

[Chemical Formula 2] $Li_x[Ni_yCo_zMn_wM^2_v]O_u$

in Chemical Formula 2 above, $M^2$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0.1 \leq y < 1$, $0.01 < z \leq 0.6$, $0.01 < w \leq 0.6$, $0 \leq v \leq 0.2$, and $1.5 \leq u \leq 5$, respectively.

**9.** The positive electrode slurry of claim 5, wherein the conductive material is included in an amount of 1 to 5 parts by weight with respect to 100 parts by weight of a total amount of the positive electrode slurry.

**10.** The positive electrode slurry of claim 5, wherein the second binder is included in an amount of 1 to 5 parts by weight with respect to 100 parts by weight of a total amount of the positive electrode slurry.

**11.** A positive electrode for a lithium secondary battery, which has a structure in which a positive electrode current collector, a first positive electrode mixture layer, and a second positive electrode mixture layer are sequentially laminated,
wherein each of the first positive electrode mixture layer and the second positive electrode mixture layer is formed using the positive electrode slurry for a lithium secondary battery according to claim 5.

**12.** The positive electrode of claim 11, wherein:

an amount of the lithium cobalt oxide represented by the Chemical Formula 1 contained in the first positive electrode mixture layer ranges from 0.5 to 2.0 parts by weight with respect to 100 parts by weight of the first positive electrode mixture layer; and
an amount of the lithium cobalt oxide represented by the Chemical Formula 1 contained in the second positive electrode mixture layer ranges from 0.01 to 0.5 parts by weight with respect to 100 parts by weight of the second positive electrode mixture layer:

[Chemical Formula 1] $Li_pCo_{1-q}M^1_qO_2$

in Chemical Formula 1 above, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.4$, respectively.

**13.** The positive electrode of claim 11, wherein a total amount of the lithium cobalt oxides contained in the first positive electrode mixture layer and the second positive electrode mixture layer is less than or equal to 0.5 parts by weight with respect to 100 parts by weight of the total amount of the positive electrode active material contained in the first positive electrode mixture layer and the second positive electrode mixture layer.

**14.** The positive electrode of claim 11, wherein a ratio of an average thickness of the first positive electrode mixture layer to an average thickness of the second positive electrode mixture layer ranges from 0.1 to 0.9.

**15.** A lithium secondary battery comprising:

the positive electrode according to claim 11;
a negative electrode; and
a separator interposed between the positive electrode and the negative electrode.

## INTERNATIONAL SEARCH REPORT

International application No.
**PCT/KR2022/006460**

### A. CLASSIFICATION OF SUBJECT MATTER

**H01M 4/62**(2006.01)i; **H01M 4/1391**(2010.01)i; **H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/62(2006.01); H01M 10/052(2010.01); H01M 10/0525(2010.01); H01M 10/42(2006.01); H01M 4/02(2006.01); H01M 4/131(2010.01); H01M 4/48(2010.01); H01M 4/58(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비가역 첨가제 (irreversible additive), 양극 첨가제 (cathode additive), 코발트 (cobalt), 입도 (particle size distribution), 이차전지 (secondary battery)

### C. DOCUMENTS CONSIDERED TO BE RELEVANT

| Category* | Citation of document, with indication, where appropriate, of the relevant passages | Relevant to claim No. |
|---|---|---|
| X<br>Y | KR 10-2013-0112567 A (KOREA ELECTRONICS TECHNOLOGY INSTITUTE) 14 October 2013 (2013-10-14)<br>See abstract; claim 1; and paragraphs [0001], [0040], [0088], [0129] and [0130]. | 1-4<br>5-15 |
| Y | KR 10-2073951 B1 (LG CHEM, LTD.) 05 February 2020 (2020-02-05)<br>See claims 1 and 8-11; and paragraphs [0060], [0064], [0069], [0070] and [0124]. | 5-15 |
| A | JP 09-147863 A (SANYO ELECTRIC CO., LTD.) 06 June 1997 (1997-06-06)<br>See entire document. | 1-15 |
| A | KR 10-2019-0059115 A (LG CHEM, LTD.) 30 May 2019 (2019-05-30)<br>See entire document. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 August 2022** | **26 August 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**

International application No.
**PCT/KR2022/006460**

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0079534 A (LG CHEM, LTD.) 05 July 2019 (2019-07-05)<br>See entire document. | 1-15 |

Form PCT/ISA/210 (second sheet) (July 2019)

**INTERNATIONAL SEARCH REPORT**
**Information on patent family members**

International application No.
**PCT/KR2022/006460**

| Patent document cited in search report | Publication date (day/month/year) | Patent family member(s) | Publication date (day/month/year) |
|---|---|---|---|
| KR 10-2013-0112567 A | 14 October 2013 | KR 10-1383360 B1 | 14 April 2014 |
| | | WO 2013-151209 A1 | 10 October 2013 |
| KR 10-2073951 B1 | 05 February 2020 | KR 10-2019-0064424 A | 10 June 2019 |
| JP 09-147863 A | 06 June 1997 | None | |
| KR 10-2019-0059115 A | 30 May 2019 | KR 10-2345015 B1 | 28 December 2021 |
| KR 10-2019-0079534 A | 05 July 2019 | CN 110651389 A | 03 January 2020 |
| | | EP 3605678 A1 | 05 February 2020 |
| | | US 1283064 B2 | 22 March 2022 |
| | | US 2020-0083525 A1 | 12 March 2020 |
| | | WO 2019-132449 A1 | 04 July 2019 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210069635